# EUROPEAN PATENT APPLICATION

(11) **EP 1 372 313 A1**
(43) Date of publication of application: **17.12.2003**
(21) Application number: 02701654.2
(22) Date of filing: 28.02.2002
(51) Int. Cl.: H04L 29/06

(54) **DATA COMMUNICATION DEVICE**

(30) Priority: 01.03.2001 JP 2001056517
(71) Applicant: MATSUSHITA ELECTRIC INDUSTRIAL CO., LTD., Kadoma-shi, Osaka 571-8501 (JP)
(72) Inventor: ITO, Takatsugu, Chikushino-shi, Fukuoka 818-0067 (JP)
(74) Representative: Balsters, Robert
(86) International application number: JP0201884
(87) International publication number: WO02071725

(57) **Abstract**

Disclosed is a data communication device for performing synchronous/asynchronous conversion between an asynchronous point to point protocol (PPP) device and a synchronous PPP device. An asynchronous interface unit performs communication of asynchronous PPP data with the asynchronous PPP unit. A synchronous interface unit performs communication of synchronous PPP data with the synchronous PPP device. A synchronous/asynchronous converter carries out synchronous/asynchronous PPP conversion, monitors a Link Control Protocol (LCP) Configure Request and stores an Asynchronous Control Character Map (ACCM) value on control code escape included in the LCP Configure Request in an ACCM storage unit. Moreover, after the LCP is established, referring the ACCM value stored in the ACCM storage unit, the synchronous/asynchronous converter performs escape processing of the control code for the data transmitted from the synchronous PPP device.

## Description

### TECHNICAL FIELD

The present invention relates to a data communication device for synchronous/asynchronous point-to-point protocol (PPP) conversion between an asynchronous communication equipment and a synchronous communication equipment

### BACKGROUND ART

In case that a data terminal equipment such as personal computer is connected to an internet service provider or the like over a serial communication line such as telephone network or the like, data is encapsulated in accordance with a point-to-point protocol (PPP) capable of transmitting under various kinds of upper layer protocols in the serial line.

Following is an example of the network configurations.

A personal computer is connected to an ISDN terminal adapter over an asynchronous serial line. The ISDN terminal adapter uses a synchronous PPP connection service provided by an internet service provider over an ISDN line.

In this case, an asynchronous PPP is used over an asynchronous serial line and a synchronous PPP is used over the ISDN line. One of the major differences between the asynchronous PPP and the synchronous PPP is that in the asynchronous PPP a 1 octet of control code data not more than hexadecimal 20H is converted into 2 octet escape sequence.

Practically, however, not all of the control codes not more than hexadecimal 0x20 are escaped but only requested data are escaped in both of a transmitter and a receiver according to the requests from the receiver side PPP unit. Negotiation between the transmitter and the receiver is performed in accordance with Link Control Protocol (LCP) at the stage of PPP establishment.

A requester transmits a LCP Configure Request packet including Asynchronous Control Character Map (ACCM) value that has a mapped information for necessity of escaping on control codes.

When a counterpart accepts the LCP Configure Request received, the counterpart sends back a LCP Configure Acknowledgement packet. The LCP negotiation finishes when both of the requester and the counterpart exchange sending of LCP Configure Acknowledgement packets each other. In the following transmission, escaped data (escape-processed date) of the control code is transmitted according to the ACCM value agreed in the LCP negotiation.

However, escaping of the control codes is originally required in asynchronous PPP only. Therefore, some synchronous PPP devices send data without escaping the control codes though agreeing with the ACCM negotiation on Link Control Protocol (LCP). At that time, a synchronous PPP unit in receiving side can not distinguish data less than hexadecimal 0x20 between a control code and an application data. Therefore, a problem occurs in an asynchronous PPP device that data is not received correctly.

### DISCLOSURE OF THE INVENTION

The present invention aims to provide a data communication device enable to communicate data between an asynchronous point-to-point (PPP) unit and a synchronous PPP unit.

The data communication device of the present invention carries out synchronous/ asynchronous conversion between an asynchronous point-to-point (PPP) device and a synchronous PPP device.

The data communication device includes an asynchronous interface unit, a synchronous interface unit, an Asynchronous Control Character Map (ACCM) storage unit and a synchronous/asynchronous converter.

The asynchronous interface unit performs communication of asynchronous PPP data with the asynchronous PPP device. The synchronous interface unit performs communication of synchronous PPP data with the synchronous PPP device. The ACCM storage unit stores ACCM values related to escaping control codes. A synchronous/asynchronous converter performs two-way conversion between asynchronous PPP and synchronous PPP.

Herein, the synchronous/asynchronous converter monitors a Link Control Protocol (LCP) Configure Request from the asynchronous PPP device received by the asynchronous interface unit. Additionally, the synchronous/asynchronous converter stores an ACCM value included in the LCP Configure Request into the ACCM storage unit. Moreover, the synchronous/asynchronous converter performs escape processing of the control codes for data from the synchronous PPP device, referring an ACCM value stored in ACCM storage unit, after LCP is established.

The configuration of the data communication device enables to provide data communication between the synchronous PPP device and the asynchronous PPP.

### BRIEF DESCRIPTION OF THE DRAWINGS

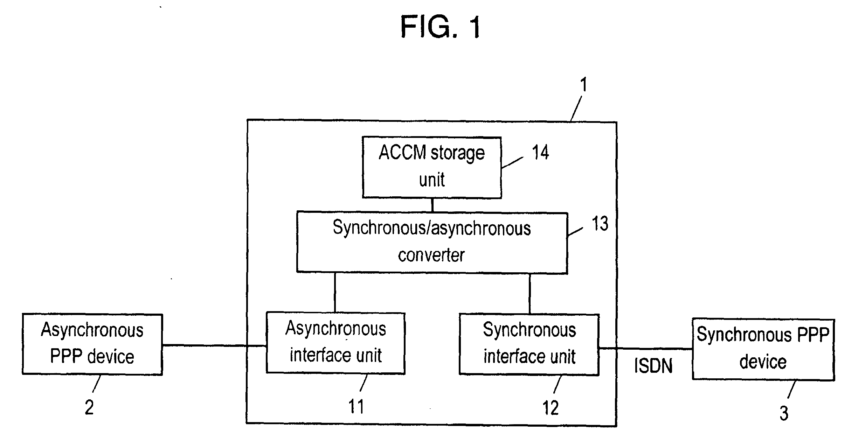

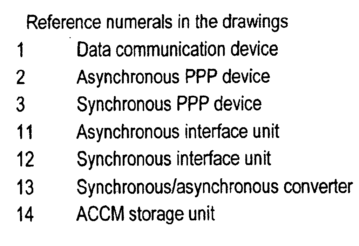

FIG. 1 shows a block diagram of the data communication device used in the exemplary embodiment of the present invention.

### DETAILED DESCRIPTION OF PREFERRED EMBODIMENTS

In case that a synchronous point-to-point (PPP) device performs data communication not in accordance with an ACCM value agreed in Link Control Protocol (LCP) negotiation, it is convenient, for example, that an intermediary device, which carries out synchronous/asynchronous conversion, performs escape processing.

A device for asynchronous/synchronous conversion (referred to as a data communication device in the exemplary embodiments described hereinafter) is desired to monitor the LCP negotiation between the synchronous PPP device and the asynchronous PPP device and to recognize an Asynchronous Control Character Map (ACCM) value necessary for escape-processing.

The data communication device of the present invention, which links a synchronous PPP device and an asynchronous PPP device, has a function to monitor the LCP negotiation between the synchronous PPP device and the asynchronous PPP device. The data communication device further includes the function to recognize the ACCM value necessary for escape processing. Thus, the data communication device enables to provide data communication between the synchronous PPP device and the asynchronous PPP device.

### (Exemplary embodiment 1)

FIG. 1 shows a block diagram of a data communication device used in the exemplary embodiment of the present invention.

FIG. 1 shows data communication device 1, asynchronous PPP device 2 such as a personal computer and synchronous PPP device 3 such as an access server.

Data communication device 1 includes asynchronous interface unit 11 for transmitting or receiving asynchronous PPP data; synchronous interface unit 12 for transmitting or receiving synchronous PPP data; synchronous/asynchronous converter 13 providing two-way conversion between synchronous PPP and asynchronous PPP; and ACCM storage unit 14 for storing the ACCM value on control code escape.

Data communication device 1 connects directly or indirectly to asynchronous PPP device 2 over an asynchronous line. Also, data communication device 1 connects directly or indirectly to synchronous PPP device 3 over a synchronous line.

Assume synchronous PPP device 3 in the exemplary embodiment operates as follows:
(1) with regard to the ACCM negotiation, the device accepts requests from the asynchronous side completely,
(2) on the other hand, the transmits data to asynchronous PPP device 2 without control code escape in usual data communication.

Now the operation of the data communication device with the above mentioned configuration is described.

After link connections are established in both the asynchronous line and the synchronous line, asynchronous PPP device 2 and synchronous PPP device 3 send LCP Configure Requests to counterparts respectively to begin the LCP negotiation.

The LCP Configure Request transmitted from asynchronous PPP device 2 to synchronous PPP device 3 includes a ACCM value regarding the control code escaping to be executed in the data sent from synchronous PPP device 3 to asynchronous PPP device 2.

The LCP Configure Request transmitted from synchronous PPP device 3 to asynchronous PPP device 2 includes a ACCM value regarding the control code escaping to be executed in the data sent from asynchronous PPP device 2 to synchronous PPP device 3.

Synchronous/asynchronous converter 13 of data communication device 1 monitors the LCP Configure Request transmitted from asynchronous PPP device 2 to synchronous PPP device 3. During this operation, synchronous/asynchronous converter .13 stores the ACCM values included in the LCP Configure Request in ACCM storage unit 14.

This monitoring is carried out not only before and after LCP establishment but also during usual operation.

Following the LCP negotiation, packets related to PPP authentication or Network Control Protocol (NCP) are exchanged between asynchronous PPP device 2 and synchronous PPP device 3.

Next, packets related to application data are exchanged between asynchronous PPP device 2 and synchronous PPP device 3.

Synchronous interface unit 12 of data communication device 1 receives packets transmitted from synchronous PPP unit 3 to asynchronous PPP unit 2, then sends the packets to synchronous/asynchronous converter 13.

Synchronous/asynchronous converter 13 examines whether the received packet is a LCP packet or other than LCP packet.

If the received packet is the LCP packet, synchronous/asynchronous converter 13 transmits all of the control codes, escaping to 2-octet according to the PPP standard, to asynchronous PPP device 2 through asynchronous interface unit 11.

If the received packet is other than LCP packet, synchronous/asynchronous converter 13 allows as many control codes as needed to be subject to escaping to 2-octet, referring ACCM value stored in ACCM storage unit 14, and transmits the control codes to asynchronous PPP unit 2 through asynchronous interface unit 11.

As described in the above exemplary embodiment, synchronous/asynchronous converter 13 enables to provide data communication between asynchronous PPP device 2 and synchronous PPP device 3 with following steps:
(1) monitoring the LCP Configure Request from asynchronous PPP device 2 constantly,
(2) storing the ACCM value included in the LCP Configure Request in ACCM storage unit 14, and
(3) providing the control code escaping, referring ACCM values stored in ACCM storage unit 14, for data sent from synchronous PPP device 3 after LCP is established.

### (Exemplary embodiment 2)

The data communication device used in exemplary embodiment 2 has the same configuration as shown in FIG. 1 and the description is omitted.

Following the start of LCP negotiation, synchronous/asynchronous converter 13 monitors an LCP Configure Request transmitted from synchronous PPP device 3 to asynchronous PPP device 2 as in exemplary embodiment 1. During this process, synchronous/asynchronous converter 13 stores the ACCM values included in the LCP Configure Request into ACCM storage unit 14.

This monitoring is carried out not only before and after LCP establishment but also in usual communication.

In exemplary embodiment 1, the LCP Configure Request is constantly monitored, thereby the latest ACCM value requested from asynchronous PPP device 2 is stored into ACCM storage unit 14. On the other hand, in exemplary embodiment 2, only ACCM values agreed with synchronous PPP device 3 out of ACCM values requested from asynchronous PPP device 2 are stored in ACCM storage unit 14 by monitoring the LCP Configure Response.

Following the LCP establishment, synchronous/asynchronous converter 13 performs the control code escaping as in exemplary embodiment 1.

As described in the above exemplary embodiment, synchronous/asynchronous converter 13 enables to provide data communication between asynchronous PPP device 2 and synchronous PPP device 3 with following steps:
(1) monitoring the LCP Configure Response from asynchronous PPP device 2 always,
(2) storing the ACCM values included in the LCP Configure Response in ACCM storage unit 14, and
(3) processing the control code escaping for data sent from synchronous PPP unit 3 after LCP is established, referring ACCM values stored in ACCM storage unit 14.

### (Exemplary embodiment 3)

The data communication device used in exemplary embodiment 3 has the same configuration as shown in FIG. 1 and the description is omitted.

Synchronous/asynchronous converter 13 in exemplary embodiment 3 has two inner states, which are monitoring ACCM mode and communicating mode, and the default is monitoring ACCM mode.

Following the start of LCP negotiation, synchronous/asynchronous converter 13 monitors an LCP Configure Request transmitted from asynchronous PPP device 2 to synchronous PPP device 3, as in exemplary embodiment 1. During this operation, synchronous/asynchronous converter 13 stores the ACCM values included in the LCP Configure Request into ACCM storage unit 14. The monitoring is carried out only until LCP is established. Once the LCP is established, synchronous/asynchronous converter 13 switches the inner state into the communication mode and stops monitoring afterward. The establishment of LCP is recognized by detecting the LCP Configure Response in the two-way direction.

In exemplary embodiment 1, synchronous/asynchronous converter 13 monitors the LCP Configure Request always, thereby the latest ACCM value requested from asynchronous PPP device 2 is stored in ACCM storage unit 14..

In exemplary embodiment 3, however, synchronous/asynchronous converter 13 monitors the LCP Configure Request only until the LCP is established. This setting eliminates the load of monitoring LCP Configure Request after LCP is established. This is because it is be able to determine that monitoring results only until LCP establishment practically provides ACCM values for the control code escaping.

Following the LCP establishment, synchronous/asynchronous converter 13 processes the control code escaping as in exemplary embodiment 1.

As described in the above exemplary embodiment, synchronous/asynchronous converter 13 enables to provide data communication between asynchronous PPP device 2 and synchronous PPP device 3 with following steps:
(1) monitoring the LCP Configure Request from asynchronous PPP device 2 only until LCP establishment,
(2) storing the ACCM values included in LCP Configure Request in ACCM storage unit 14, and
(3) processing the control code escaping for data sent from synchronous PPP unit 3 after the LCP is established, referring the ACCM values stored in ACCM storage unit 14.

As aforementioned, synchronous/asynchronous converter 13 monitors the LCP Configure Request only until LCP is established. This eliminates the load of monitoring LCP Configure Request after the LCP is established.

### (Exemplary embodiment 4)

The data communication device used in exemplary embodiment 4 has the same configuration as shown in FIG. 1 and the description is omitted.

Synchronous/asynchronous converter 13 in exemplary embodiment 4 has two inner states, which are monitoring ACCM mode and communicating mode, and the default is monitoring ACCM mode.

Following the start of the LCP negotiation, synchronous/asynchronous converter 13 monitors the LCP Configure Response transmitted from synchronous PPP device 3 to asynchronous PPP device 2 as in exemplary embodiment 1. During this operation, synchronous/asynchronous converter 13 stores the ACCM values included in the LCP Configure Response into ACCM storage unit 14. The monitoring is carried out only until the LCP is established. Once LCP is established, synchronous/asynchronous converter 13 switches the inner state into communication mode and stops monitoring afterward. The establishment of LCP is recognized by detecting the LCP Configure Responses in the two-way directions.

In exemplary embodiment 2, synchronous/asynchronous converter 13 constantly monitors the LCP Configure Request, thereby the latest ACCM value agreed between asynchronous PPP device 2 and synchronous PPP device 3 is stored in ACCM storage unit 14.

In exemplary embodiment 4, however, synchronous/asynchronous converter 13 monitors the LCP Configure Response only until the LCP is established. This eliminates the load of monitoring the LCP Configure Request after the LCP is established. This is because it is be able to be considered that monitoring results only until LCP establishment practically provides the ACCM values for escaping processing of the control code.

Following the LCP establishment, synchronous/asynchronous converter 13 processes the control , code escaping as in exemplary embodiment 1.

As described in the above exemplary embodiment, synchronous/asynchronous converter 13 enables to provide data communication between asynchronous PPP device 2 and synchronous PPP device 3 with following steps:
(1) monitoring the LCP Configure Request from synchronous PPP device 3 only until the LCP is established,
(2) storing the ACCM values included in LCP Configure Response in ACCM storage unit 14, and
(3) performing the control code escaping for data sent from synchronous PPP unit 3 after the LCP is established, referring ACCM values stored in ACCM storage unit 14.

As aforementioned, synchronous/asynchronous converter 13 monitors the LCP Configure Response only until LCP is established. This eliminates the load of monitoring the LCP Configure Response after the LCP is established.

### (Exemplary embodiment 5)

The data communication device used in exemplary embodiment 5 has the same configuration as shown in FIG. 1 and the description is omitted.

Synchronous/asynchronous converter 13 in exemplary embodiment 5 has an internal flag to indicate whether or not monitoring the ACCM is performed. In the default state, the internal flag is "ON" and monitoring is performed.

Following the start of LCP negotiation, synchronous/asynchronous converter 13 monitors the LCP Configure Request transmitted from asynchronous PPP device 2 to synchronous PPP device 3 as in exemplary embodiment 1. Upon receiving the LCP Configure Request packet, synchronous/asynchronous converter 13 stores the ACCM values included in the packet in ACCM storage unit 14 and switch the internal flag to "OFF".

Monitoring is not processed under "OFF" state of the internal flag.

In exemplary embodiment 1, LCP Configure Request is constantly monitored, thereby the latest ACCM value requested from asynchronous PPP device 2 is stored into ACCM storage unit 14, in each time that the latest ACCM value is received.

In exemplary embodiment 3, however, synchronous/asynchronous converter 13 monitors only the LCP Configure Request received first. This eliminates the load of monitoring the LCP Configure Request afterward. This is because it is able to be considered that, if the ACCM value first requested by asynchronous PPP device 2 is recognized, before an agreement between both of asynchronous PPP device 2 and synchronous PPP device 3, the ACCM value for escaping processing of the control code is practically provided.

Following the LCP establishment, synchronous/asynchronous converter 13 performs the control code escaping as in exemplary embodiment 1.

As described above, synchronous/asynchronous converter 13 in exemplary embodiment 5 enables to provide data communication between asynchronous PPP device 2 and synchronous PPP device 3 with following steps:
(1) monitoring the LCP Configure Request from asynchronous PPP device 2 only until the packet is received,
(2) storing the ACCM values included in LCP Configure Request in ACCM storage unit 14, and
(3) processing the control code escaping for data sent from synchronous PPP unit 3 after the LCP is established, referring ACCM values stored in ACCM storage unit 14.

As aforementioned, synchronous/asynchronous converter 13 monitors only the LCP Configure Request received first. This eliminates the load of monitoring the LCP Configure Request afterward.

### (Exemplary embodiment 6)

The data communication device used in exemplary embodiment 6 has the same configuration as shown in FIG. 1 and the description is omitted.

Synchronous/asynchronous converter 13 in exemplary embodiment 6 does not monitor the ACCM. Following the LCP establishment, synchronous/asynchronous converter 13 performs escape processing of all of the control codes transmitted from synchronous PPP device 3 to asynchronous PPP device 2.

A device having such a simplified configuration as described above enables to provide data communication between asynchronous PPP device 2 and synchronous PPP device 3.

### INDUSTRIAL APPLICABILITY

As described above, the data communication device in this invention monitors an LCP negotiation between a synchronous PPP device and an asynchronous PPP device to recognize an ACCM value needed for escape processing in a direction of the transmission to the asynchronous PPP device. In addition, the data communication device performs synchronous/asynchronous conversion including escaping in usual communication. Accordingly, the data communication device enables to provide a data communication between an asynchronous PPP device and a synchronous PPP device.

## Claims

1. A data communication device for synchronous/asynchronous conversion between an asynchronous point to point protocol (PPP) device and a synchronous PPP device comprising:
an asynchronous interface unit for performing communication of asynchronous PPP data with said asynchronous PPP device;
a synchronous interface unit for performing communication of synchronous PPP data with said synchronous PPP device;
an ACCM storage unit for storing Asynchronous Control Character Map (ACCM) value on escaping control codes; and
a synchronous/asynchronous converter for carrying out PPP synchronous/asynchronous conversion,
wherein said synchronous/asynchronous converter monitors a Link Control Protocol (LCP) Configure Request from said asynchronous PPP device received by said asynchronous interface unit, stores an ACCM value included in said LCP Configure Request in said ACCM storage unit, and performs escape-processing of the control code for the data transmitted from said synchronous PPP device received by said synchronous interface unit, referring the ACCM value stored in said ACCM storage unit, after the LCP establishment.

2. The data communication device of claim 1, wherein said synchronous/asynchronous converter examines a received packet whether the received packet is an LCP packet or other than the LCP packet, converts all control codes into 2 octet escape sequence according to a PPP standard if the received packet is the LCP packet, and converts a needed quantity of control codes into the 2 octet escape sequence referring to the ACCM value stored in said ACCM storage unit if the received packet is other than the LCP. packet.

3. The data communication device of claim 1, wherein each of said asynchronous PPP unit and said asynchronous PPP unit transmits a LCP Configure Request each other to start an LCP negotiation.

4. The data communication device of one of claim 1 and claim 3, wherein said LCP Configure Request transmitted from said asynchronous PPP device to said synchronous PPP device includes ACCM values on escaping the control code to be used by said synchronous PPP device in data transmission.

5. A data communication device for synchronous/asynchronous conversion between an asynchronous point to point protocol (PPP) device and a synchronous PPP device comprising:
(a) an asynchronous interface unit for performing communication of asynchronous PPP data with said asynchronous PPP unit;
(b) a synchronous interface unit for performing communication of synchronous PPP data with said synchronous PPP unit;
an ACCM storage unit for storing an Asynchronous Control Character Map (ACCM) value on escaping in a control code; and
a synchronous/asynchronous converter for carrying out PPP synchronous/asynchronous conversion,
wherein said synchronous/asynchronous converter monitors a Link Control Protocol (LCP) Configure Response from said synchronous PPP device received by said synchronous interface unit, stores an ACCM values included in said LCP Configure Response in said ACCM storage unit, and performs escape-processing of the control code of the data transmitted from said synchronous PPP device received by said synchronous interface unit, referring the ACCM value stored in said ACCM storage unit, after the LCP establishment.

6. The data communication device of claim 1, wherein said synchronous/asynchronous converter monitors the LCP Configure Request from said asynchronous PPP device only until LCP establishment.

7. The data communication device of claim 5, wherein said synchronous/asynchronous converter monitors the LCP Configure Response from said synchronous PPP device only until an LCP establishment.

8. The data communication device of claim 1, wherein said synchronous/asynchronous converter monitors the LCP Configure Request from said synchronous PPP device only until a first one of the LCP Configure Request is received and stores the ACCM values included in said first one of the LCP Configure Request received in said ACCM storage unit.

9. A data communication device for synchronous/asynchronous conversion between an asynchronous point to point protocol (PPP) device and a synchronous PPP device comprising:
an asynchronous interface unit for performing communication of asynchronous PPP data with said asynchronous PPP device;
a synchronous interface device for performing communication of synchronous PPP data with said synchronous PPP device; and
a synchronous/asynchronous converter for exchanging data with said asynchronous interface device and said synchronous interface device respectively and for carrying out synchronous/asynchronous PPP conversion,
wherein said synchronous/asynchronous converter performing escape processing of all control codes received from said synchronous PPP device.

10. The data communication device of any one of claim 1 to 4, wherein said synchronous/asynchronous converter monitors the LCP Configure Request from said asynchronous PPP device received by said asynchronous interface unit constantly.

11. The data communication device of claim 5, wherein said synchronous/asynchronous converter monitors the LCP Configure Request from said synchronous PPP device received by said synchronous interface device constantly.
